# EUROPEAN PATENT APPLICATION

(11) **EP 3 910 343 A1**
(43) Date of publication of application: **17.11.2021**
(21) Application number: 20738909.9
(22) Date of filing: 10.01.2020
(51) Int. Cl.: G01N 35/00, G01N 35/10

(54) **AUTOMATED ANALYZER**

(30) Priority: 11.01.2019 JP 2019003570
(71) Applicant: Hitachi High-Tech Corporation, Minato-ku Tokyo 105-6409 (JP)
(72) Inventor: MATSUOKA, Shinya, Tokyo 105-6409 (JP); EBIHARA, Daisuke, Tokyo 105-6409 (JP); NISHIKI, Kenichiro, Tokyo 105-6409 (JP)
(74) Representative: MERH-IP Matias Erny Reichl Hoffmann Patentanwälte PartG mbB
(86) International application number: PCT/JP2020/000687
(87) International publication number: WO 2020/145389

(57) **Abstract**

Provided is an automatic analyzer that prevents different types of reagents from being misplaced and prevents reagents from being removed at wrong timing with less space and fewer components. A stopper 202 is installed at a position where the stopper 202 is in contact with an insertion direction front surface 302 of a reagent container 301A and 301B and prevents the reagent container 301A and 301B from being set before the reagent container 301A and 301B is joined to a piercing needle 205 and where the stopper 202 interferes with a holding surface of the reagent container 301A and 301B and prevents the reagent container 301A and 301B from moving in a slot 201 even if the reagent container 301A and 301B is attempted to be removed in a state where the reagent container 301A and 301B is joined to the piercing needle 205.

## Description

### Technical Field

The present invention relates to an automatic analyzer that uses a reagent to analyze a concentration of a predetermined component in a biological sample (hereinafter referred to as a sample) such as blood and urine.

### Background Art

As an example of a sample analyzer capable of smoothly replacing a reagent container as compared to a sample analyzer in the related art, PTL 1 discloses that the sample analyzer in which a container installation portion configured to install a reagent container, an openable and closable cover provided in the reagent container installation portion, a solenoid configured to lock the cover at an open position, and an information processing unit configured to control locking and unlocking of the cover at the open position by the solenoid are provided, and the cover is locked at the open position when replacing a reagent.

### Citation list

### Patent Literature

PTL 1: JP-A-2011-209207

### Summary of Invention

### Technical Problem

There has been known an automatic analyzer that analyzes a sample using the reagent installed in the analyzer.

As the reagent used in the automatic analyzer, two kinds of reagents, for example, a reagent prepared individually for each measurement target item (hereinafter referred to as "assay reagent") and a reagent commonly used for various measurement target items (hereinafter referred to as "system reagent") are often used.

Among them, a plurality of system reagents are often mounted according to a measurement principle of the analyzer, a cleaning method of the analyzer, and the like.

Here, when there are many system reagents to be installed, a user may erroneously install the reagent at a place where the reagent is to be installed. In this case, measurement is not correctly performed. It is necessary to perform an operation again. Further, since components in the analyzer come into contact with the system reagent that is not originally intended, cleaning may be required.

Further, as another technical problem related to the system reagent, it is assumed that the user erroneously removes the system reagent being used. In this case, since the system reagent is not supplied, the analyzer cannot continue the measurement and stops the measurement. The user needs to install the reagent again and perform the measurement again, which increases a time until an analysis result is obtained.

In the automatic analyzer disclosed in PTL 1 described above, there is described a method in which the container installation portion capable of installing the reagent container containing the reagent used for an analysis and the cover for opening or closing the container installation portion are installed, and the cover portion is locked or unlocked.

Further, the cover and a nozzle portion to be inserted into the reagent are configured to be interlocked with each other. A reagent type is recognized when the reagent is placed, and when the reagent type is recognized as a correct reagent type, lowering of the cover and the nozzle is permitted, and when the reagent type is not recognized as the correct reagent type, the lowering of the nozzle is prohibited to prevent erroneous installation. After the reagent is installed, lifting of the cover and the nozzle is prohibited except for a timing at which the reagent is to be replaced, thereby preventing the user from erroneously removing the reagent.

However, in the automatic analyzer disclosed in PTL 1, it is necessary to use the cover that is not essential for a purpose of installing the reagent in the analyzer. Therefore, there is a problem that a reagent installation portion is large and complicated. In particular, there is a technical problem that it is not very suitable for an analyzer in which various reagents need to be installed.

The invention is made in order to solve the above technical problems, and provides an automatic analyzer that prevents different types of reagents from being misplaced and prevents reagents from being removed at wrong timing with less space and fewer components.

### Solution to Problem

The invention includes a plurality of means for solving the above problems, and for example, is an automatic analyzer includes: a reagent container installation portion configured to install a reagent container that contains a reagent used in an analysis; a joint portion configured to join a supply flow path connecting a position where the reagent is used with the reagent container installed in the reagent container installation portion to the reagent container; and a slot portion configured to introduce the reagent container to the joint portion. The automatic analyzer includes a stopper configured to prevent the installed reagent container from moving in the slot portion. The stopper is provided at a position where the stopper is in contact with an insertion direction front surface of the reagent container and prevents the reagent container from being installed before the reagent container is joined to the joint portion and where the stopper interferes with a holding surface of the reagent container and prevents the reagent container from moving in the slot portion even if the reagent container is attempted to be removed in a state where the reagent container is joined to the joint portion.

### Advantageous Effect

According to the invention, it is possible to prevent different types of reagents from being misplaced and prevents the reagents from being removed at wrong timing with less space and fewer components. Technical problems, configurations, and effects other than those described above will be further clarified with the following description of embodiment.

### Brief Description of Drawings

[FIG. 1] FIG. 1 is a view illustrating an overall configuration of an automatic analyzer according to an embodiment of the invention.
[FIG. 2] FIG. 2 is a schematic diagram illustrating an example of a reagent container that contains a system reagent used in the automatic analyzer according to the invention.
[FIG. 3] FIG. 3 is a schematic diagram illustrating another example of a reagent container that contains a system reagent used in the automatic analyzer according to the invention.
[FIG. 4] FIG. 4 is a schematic configuration diagram illustrating a system reagent installation portion of the automatic analyzer according to the invention.
[FIG. 5] FIG. 5 is a view illustrating an installation position of a stopper in the automatic analyzer according to the invention.
[FIG. 6] FIG. 6 is a view illustrating an installation position of the stopper when the reagent container illustrated in FIG. 2 is used in the automatic analyzer according to the invention.
[FIG. 7] FIG. 7 is a view illustrating the installation position of the stopper when the reagent container illustrated in FIG. 2 is used in the automatic analyzer according to the invention.
[FIG. 8] FIG. 8 is a view illustrating the installation position of the stopper when the reagent container illustrated in FIG. 2 is used in the automatic analyzer according to the invention.
[FIG. 9] FIG. 9 is a view illustrating an installation position of the stopper when the reagent container illustrated in FIG. 3 is used in the automatic analyzer according to the invention.
[FIG. 10] FIG. 10 is a view illustrating the installation position of the stopper when the reagent container illustrated in FIG. 3 is used in the automatic analyzer according to the invention.
[FIG. 11] FIG. 11 is a view illustrating the installation position of the stopper when the reagent container illustrated in FIG. 3 is used in the automatic analyzer according to the invention.
[FIG. 12] FIG. 12 is a flowchart illustrating installation of a reagent container in the automatic analyzer according to the invention.
[FIG. 13] FIG. 13 is a view illustrating a positional relationship between the reagent container and the stopper in steps S1, S2, S3A, and S3B in FIG. 12.
[FIG. 14] FIG. 14 is a view illustrating a positional relationship between the reagent container and the stopper in step S4 in FIG. 12.
[FIG. 15] FIG. 15 is a view illustrating a positional relationship between the reagent container and the stopper in steps S5 and S6 in FIG. 12.
[FIG. 16] FIG. 16 is a view illustrating a positional relationship between the reagent container and the stopper in step S7 in FIG. 12.
[FIG. 17] FIG. 17 is a flowchart illustrating removing the reagent container in the automatic analyzer according to the invention.
[FIG. 18] FIG. 18 is a view illustrating a positional relationship between the reagent container and the stopper in step S11 in FIG. 17.
[FIG. 19] FIG. 19 is a view illustrating a positional relationship between the reagent container and the stopper when all steps in FIG. 17 are completed.

### Description of Embodiments

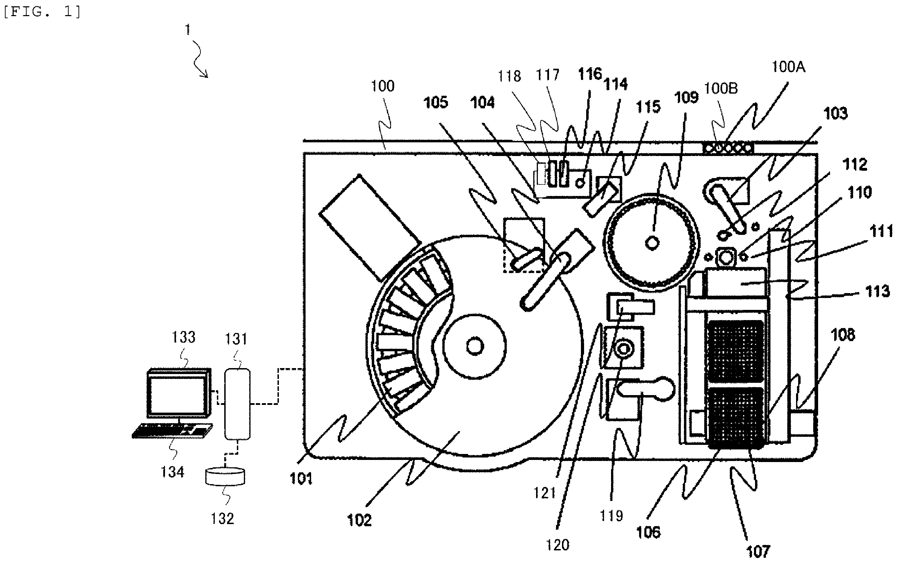

An embodiment of an automatic analyzer of the invention will be described with reference to FIGS. 1 to 19.

Here, in the following embodiment, an immunoassay analyzer will be described as an example. However, the automatic analyzer to which a reagent container installation configuration disclosed in the invention is applied is not limited to the immunoassay analyzer, and can be applied to general automatic analyzers using a system reagent, for example, a biochemical automatic analyzer, a blood testing device, and a liquid chromatograph mass spectrometer.

First, an overall configuration of the automatic immunoassay analyzer according to the present embodiment will be described with reference to FIG. 1. FIG. 1 is a view illustrating the overall configuration of the automatic immunoassay analyzer according to the present embodiment.

An automatic immunoassay analyzer 1 illustrated in FIG. 1 is a device for reacting a sample with a reagent and measuring a reacted reaction solution, and includes a transport line 100, a sample dispensing mechanism 103, an incubator 109, a magazine 108, a transport mechanism 113, a reagent disk 102, a reagent dispensing mechanism 104, a magnetic particle stirring mechanism 105, a magnetic separator 114, a BF separation transport mechanism 115, a reaction solution suction mechanism 116, a cleaning liquid A discharging mechanism 117, a cleaning liquid B discharging mechanism 118, a detection unit transport mechanism 121, a detection solution discharging mechanism 119, a detection unit 120, a control unit 131, a recording device 132, a display device 133, and an input device 134.

The transport line 100 is a line for transporting a rack 100A, on which a plurality of sample containers 100B each containing the sample can be placed, to a sample dispensing position.

The sample dispensing mechanism 103 is a nozzle for suctioning the sample contained in the sample container 100B and discharging the sample to a reaction vessel 106 on the incubator 109.

The incubator 109 is a disk for performing the reaction between the sample and the reagent at a constant temperature, and the reaction between the sample and the reagent is promoted by keeping the temperature of the incubator 109 at a predetermined temperature by a heater (not shown). A plurality of reaction vessels 106 are held in the incubator 109, and serve as a site where the sample and the reagent are mixed and reacted.

The magazine 108 stores a disposable dispensing tip 107 used by being attached to a tip of the sample dispensing mechanism 103 when sorting and dispensing the sample, and the reaction vessel 106 in which the sample and the reagent sorted by the sample dispensing mechanism 103 are put and the reaction is performed.

The transport mechanism 113 transports a unused reaction vessel 106 held in the magazine 108 to the incubator 109, transports a used reaction vessel 106 to a reaction vessel disposal portion 110, transports a unused dispensing tip 107 held in the magazine 108 to a dispensing tip installation position 111, and transports a used dispensing tip 107 to a dispensing tip disposal position 112.

The reagent disk 102 is a disk for storing a reagent container 101 that contains an assay reagent, and is kept cold in order to prevent deterioration of the assay reagent.

The reagent dispensing mechanism 104 is a nozzle for suctioning the reagent stored in the reagent container 101 in the reagent disk 102 and discharging the reagent to the reaction vessel 106.

The magnetic particle stirring mechanism 105 stirs a magnetic particle solution among the reagent in the reagent disk 102.

The BF separation transport mechanism 115 transports the reaction vessel 106 into which the magnetic particle solution is dispensed from the incubator 109 to the magnetic separator 114.

The magnetic separator 114 performs magnetic separation processing of the reaction vessel 106 into which the magnetic particle solution is dispensed.

The reaction solution suction mechanism 116 suctions a reaction solution from the reaction vessel 106 transported to the magnetic separator 114. The cleaning liquid A discharging mechanism 117 discharges a cleaning liquid A to the reaction vessel 106 transported to the magnetic separator 114. The cleaning liquid B discharging mechanism 118 discharges a cleaning liquid B to the reaction vessel 106 transported to the magnetic separator 114.

The detection unit transport mechanism 121 transports the reaction vessel 106 from the incubator 109 to the detection unit 120 or from the detection unit 120 to the incubator 109.

The detection solution discharging mechanism 119 discharges the reagent for detection to the reaction vessel 106 transported to the detection unit 120 by the detection unit transport mechanism 121.

The detection unit 120 detects a measurement target substance of the reaction solution in the reaction vessel 106 to which the detection reagent is discharged by the detection solution discharging mechanism 119.

A cleaning step performed in the magnetic separator 114 is performed in order to remove a substance derived from the sample remaining in the reaction solution. Here, cleaning is performed by sequentially using two types of cleaning liquids . An aqueous solution is used as the cleaning liquid A, and mainly removes a coexisting substance such as an inorganic salt. A solution containing an organic solvent is used as the cleaning liquid B, and mainly removes the coexisting substance such as a lipid or a protein.

The detection reagent discharged from the detection solution discharging mechanism 119 is used to adjust a pH in order to obtain a liquid property suitable for the detection after the cleaning step.

The cleaning liquids A and B and a detection solution are collectively referred to as the system reagent.

The control unit 131 is a computer that controls various operations of each member described above and performs arithmetic processing of obtaining a concentration of a predetermined component in the sample based on a detection result obtained by the detection unit 120, and is configured with one or a plurality of processors, a CPU, and the like. The control of the operation of each device by the control unit 131 is performed by various programs. The program is stored in the recording device 132 and the like, and is read and performed by the CPU.

Control processing on the operation performed by the control unit 131 may be integrated into one program, may be divided into a plurality of programs, or may be a combination thereof. Further, a part or all of the programs may be implemented by dedicated hardware, or may be modularized.

The recording device 132 is a recording medium that records data relating to the sample put into the automatic immunoassay analyzer 1 and an analysis result, and is configured with a semiconductor memory such as a flash memory and a magnetic disk such as an HDD. Further, the recording device 132 also records various computer programs and the like for controlling the operation of each device in the automatic immunoassay analyzer 1 and performing various display processing and the like to be described later.

The display device 133 is a display device such as a liquid crystal display that displays information related to the analysis result and a progress of the analysis.

The input device 134 includes a keyboard for inputting data and a mouse.

Next, an outline of an overall analysis flow in the automatic immunoassay analyzer 1 according to the present embodiment illustrated in FIG. 1 will be described. Prior to the analysis, consumables such as the reagent container 101, the dispensing tip 107, and the reaction vessel 106 necessary for the analysis are installed in the reagent disk 102 and the magazine 108 in the analyzer, respectively.

First, a user puts the rack 100A into the automatic analyzer in a state where the sample such as blood or urine to be analyzed is put in the sample container 100B. Here, the unused reaction vessel 106 and dispensing tip 107 are transported to the incubator 109 and the dispensing tip installation position 111 by the transport mechanism 113.

Thereafter, the reagent dispensing mechanism 104 accesses an inside of the reagent disk 102, such that the reagent stored in the reagent container 101 is dispensed into the reaction vessel 106 on the incubator 109.

Thereafter, when the rack 100A passes through the transport line 100 and reaches the sample dispensing position, the sample is dispensed into the reaction vessel 106 by the sample dispensing mechanism 103, and the reaction between the sample and the reagent is started. The reaction referred to herein means, for example, binding the sample and a luminescence labeling substance by an antigen-antibody reaction using a luminescence labeling antibody that reacts only with a specific antigen of the sample as the reagent.

After this operation is completed, the used dispensing tip 107 is transported to the dispensing tip disposal position 112 by the transport mechanism 113 and disposed.

After the reaction between the sample and the reagent is started by stirring, another reagent may be further added at a specific timing to perform the reaction. For example, there is a process in which magnetic beads to which an antibody is bound to a surface thereof are further bound to the antigen described above. Therefore, the reaction vessel 106 placed in the incubator 109 for a predetermined time is transported to the magnetic separator 114 by the BF separation transport mechanism 115.

In the magnetic separator 114, magnetic separation of the sample is performed, then an unnecessary solution is discharged from the reaction solution suction mechanism 116, and the system reagent called the cleaning liquid is discharged from the cleaning liquid A discharging mechanism 117 and the cleaning liquid B discharging mechanism 118.

After a magnetic separation process is completed, the reaction vessel 106 is transported again from the magnetic separator 114 to the incubator 109 by the BF separation transport mechanism 115.

Regardless of presence or absence of the magnetic separation, the reaction vessel 106 placed in the incubator 109 for the predetermined time is transported to the detection unit 120 by the detection unit transport mechanism 121, and after the detection reagent is discharged by the detection solution discharging mechanism 119, a signal from the reaction solution is detected by the detection unit 120, and the detection result is output to the control unit 131.

In the control unit 131, the concentration of the predetermined component in the sample is obtained, and a result is displayed on the display device 133 to be notified to the user, and is recorded in the recording device 132.

After a detection operation is completed, the reaction vessel 106 is transported to the reaction vessel disposal portion 110 by the detection unit transport mechanism 121 and the transport mechanism 113, and is disposed.

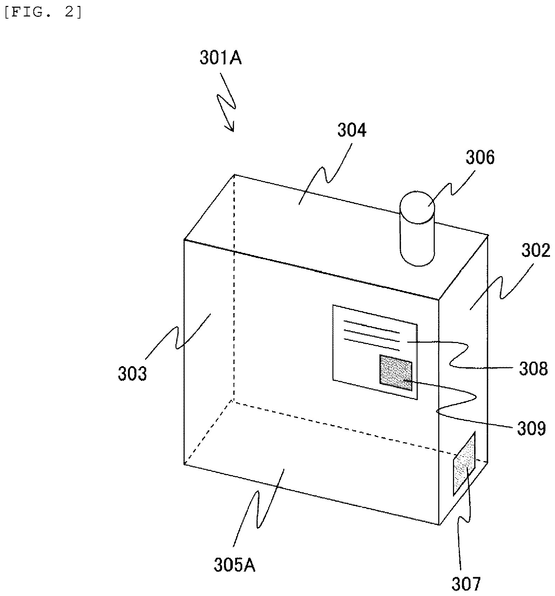

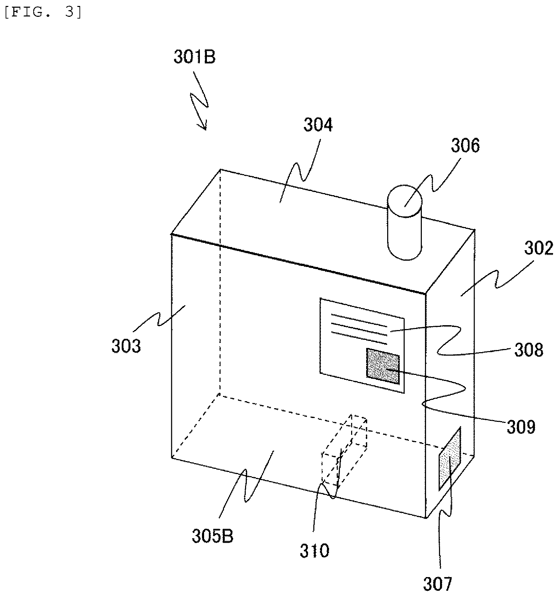

Next, an outline of the reagent container that contains the system reagent used in the automatic immunoassay analyzer 1 according to the present embodiment will be described with reference to FIGS. 2 and 3. A dimensional relationship between the reagent container and a system reagent installation portion 200 will be described in detail later. FIGS. 2 and 3 are schematic diagrams illustrating examples of the reagent container that contains the system reagent used in the automatic immunoassay analyzer.

A reagent container 301A illustrated in FIG. 2 is a plastic container having a shape in which a depth is longer than a width.

Among surfaces of the reagent container 301A, the respective surfaces illustrated in FIG. 2 will be described as an insertion direction front surface 302, a side surface 303, a top surface 304, and a bottom surface 305A. The same applies to a reagent container 301B illustrated in FIG. 3, and the reagent container 301B has a bottom surface 305B.

A cylindrical screw lid 306 is provided on the top surface 304 of each of the reagent containers 301A and 301B. The screw lid 306 is loosened by the user after the reagent container is installed in the analyzer, and is used to introduce air from a gap.

On the front surface 302 of each of the reagent containers 301A and 301B, a septum portion 307 is provided at a position into which a piercing needle 205 provided at a tip of a slot 201 of the system reagent installation portion 200 to be described later can be inserted.

The septum portion 307 is made of rubber, and when the piercing needle 205 penetrates the septum portion 307, a supply flow path 206 provided at a tip of the piercing needle 205 communicates with an inside of each of the reagent containers 301A and 301B, such that the system reagent can be supplied to the analyzer. Since the septum portion 307 is made of the rubber, hermeticity can be ensured even when the piercing needle 205 penetrates, and the system reagent does not leak out.

A label 308 on which a type, an expiration date, and the like of the reagent are described is attached to the side surface 303 of the reagent container 301A. Further, an RFID tag 309 is attached to the label 308. In the RFID tag 309, information on the system reagent, such as the reagent type, a lot number, the expiration date, whether the system reagent is used, and the number of remaining uses, is recorded.

In contrast, in the reagent container 301B illustrated in FIG. 3, a cutout portion 310 is provided in the bottom surface 305B. A function of the cutout portion 310 will be described later.

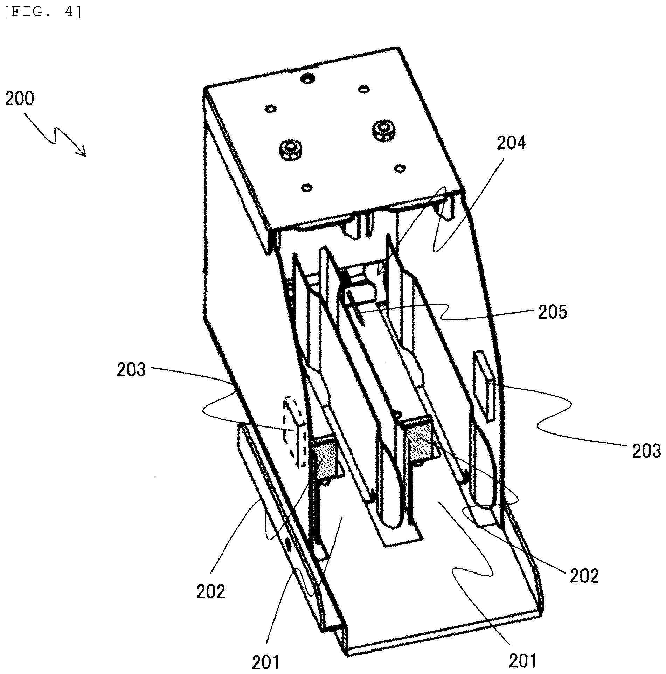

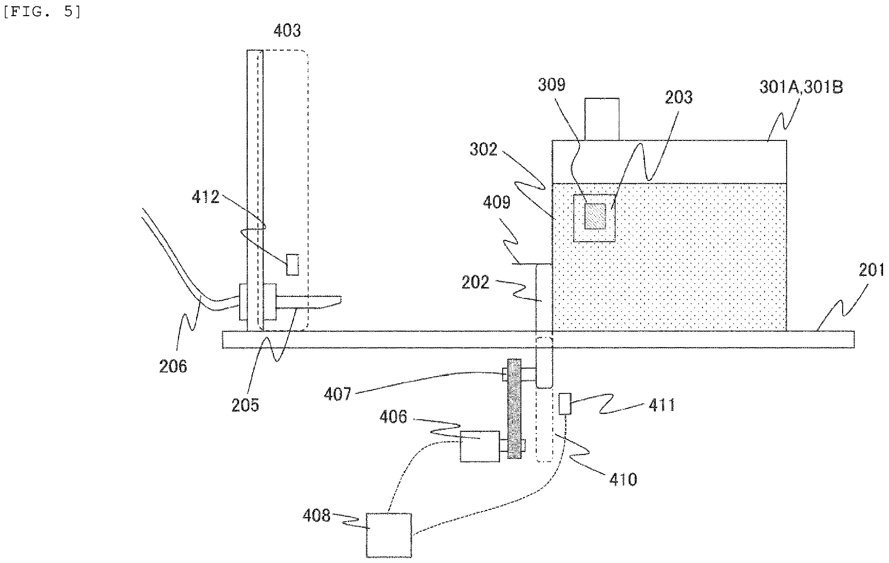

Next, a system reagent supply portion as a main part of the automatic immunoassay analyzer 1 according to the present embodiment will be described with reference to FIGS. 4 and 5. FIG. 4 is a perspective view of the system reagent installation portion 200 in the automatic immunoassay analyzer according to the present embodiment. FIG. 5 schematically illustrates one of two slots 201 installed in the system reagent installation portion 200 described with reference to FIG. 4 by taking out one of the slots 201. Since structures of the slots 201 are the same, one of the slots 201 will be described.

In the automatic immunoassay analyzer 1 according to the present embodiment, system reagent installation portions 200 as illustrated in FIG. 4 are installed at three positions on a back side of a front cover of the automatic immunoassay analyzer 1. As illustrated in FIG. 4, in the system reagent installation portion 200, there are two slots 201 into which the reagent containers 301A and 301B containing the system reagents used for the analysis are inserted, and a total of six system reagents can be installed in the entire analyzer.

Two of each of three types of system reagents are provided at an installation place. This is because, when one reagent container is empty, the other reagent container is automatically used. Accordingly, this makes it possible to continuously operate the analyzer without stopping the analyzer for installing the system reagent.

As illustrated in FIGS. 4 and 5, the system reagent installation portion 200 includes the slots 201, stoppers 202, RFID readers 203, the piercing needles 205, a motor 406, a belt 407, a stopper control unit 408, a stopper detection sensor 411, and a reagent container detection sensor 412.

The slots 201 are guide paths for introducing the reagent containers 301A and 301B to be described later into the piercing needles 205.

The stoppers 202 are installed at positions where the installed reagent containers 301A and 301B are prevented from moving in the slots 201 in the guide paths of the slots 201.

When the motor 406 is rotationally driven under control of the stopper control unit 408, the stopper 202 moves up and down using a rotational force transmitted via the belt 407 to be pushed out from a lower side to an upper side of the slot 201, or retreats from the upper side to the lower side so as to prevent the reagent containers 301A and 301B from being set or being removed.

In the present embodiment, the stoppers 202 are disposed at positions where the stoppers 202 are in contact with the insertion direction front surfaces 302 of the reagent containers 301A and 301B and prevent the reagent containers 301A and 301B from being installed before the reagent containers 301A and 301B are joined to the piercing needles 205. Further, the stoppers 202 are disposed at positions where the stoppers 202 interfere with holding surfaces of the reagent containers 301A and 301B and prevent the reagent containers 301A and 301B from moving in the slots 201 even if the reagent containers 301A and 301B are attempted to be removed in a state where the reagent containers 301A and 301B are joined to the piercing needles 205.

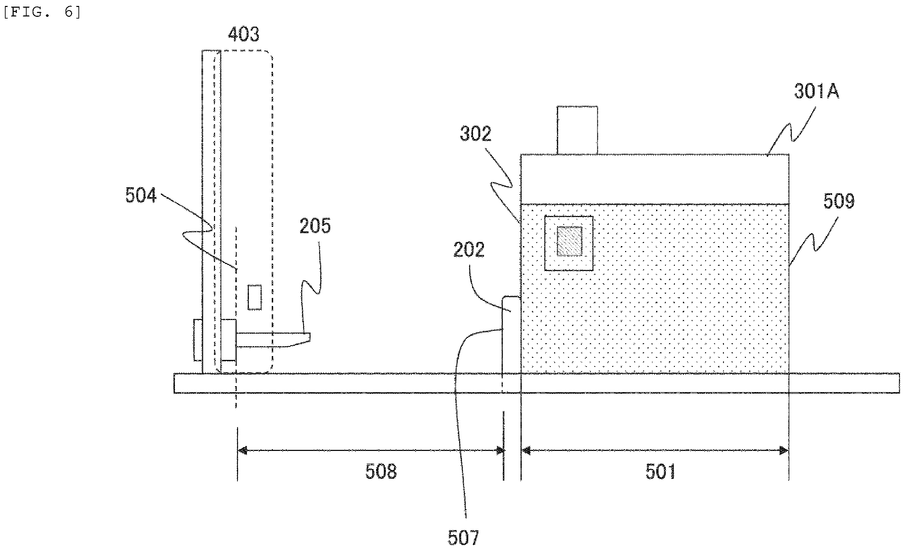

Here, in the reagent container 301A illustrated in FIG. 2, the holding surface is the side surface 303 which is a surface facing the insertion direction front surface 302 of the reagent container 301A, and the surface is defined as a reagent container rear end 509 (see FIG. 6 and the like) for convenience.

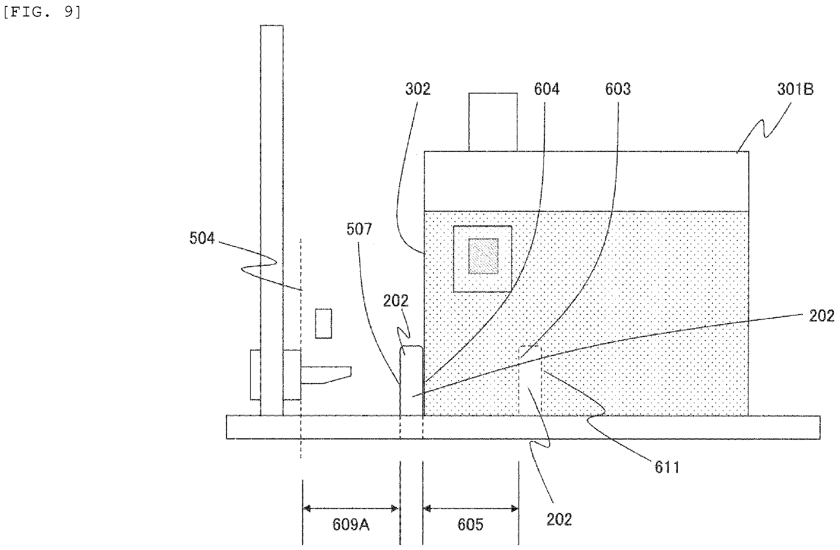

Further, in the reagent container 301B illustrated in FIG. 3, of two surfaces of the cutout portion 310 provided on the bottom surface 305B thereof perpendicular to an insertion direction of the reagent container 301A, a surface on a cutout portion rear end 611 (see FIG. 9 and the like) side is the holding surface.

Therefore, when the stoppers 202 are above the slots 201 (a lifting position 409 illustrated in FIG. 5), the reagent containers 301A and 301B interfere with the stoppers 202, thereby preventing the reagent containers 301A and 301B from being inserted into slot tips 403.

In contrast, when the stoppers 202 are below the slots 201 (a lowering position 410 illustrated in FIG. 5, the position illustrated by an alternate long and short dash line in the drawing), the stoppers 202 do not interfere with the insertion direction front surfaces 302 of the reagent containers 301A and 301B, and the reagent containers 301A and 301B can be inserted into the slot tips 403.

Further, in a state where the reagent containers 301A and 301B are inserted into the slot tips 403, when the stoppers 202 are at the lifting position 409, the holding surfaces of the reagent containers 301A and 301B interfere with the stoppers 202 and the reagent containers 301A and 301B cannot be pulled out in a case where the reagent containers 301A and 301B are attempted to be pulled out.

That is, it is desirable that the stopper control unit 408 fixes the stoppers 202 except for a timing at which the reagent containers 301A and 301B are replaced, and drives and controls the motor 406 so as to prevent the movement of the reagent containers 301A and 301B.

In particular, in the present embodiment, when it is determined based on reagent information that the reagent containers 301A and 301B installed in the slots 201 are correct, it is desirable that the stopper control unit 408 drives the stoppers 202 so as not to prevent the reagent containers 301A and 301B from being set. Further, when the reagent containers 301A and 301B are not determined to be correct, it is desirable that the stopper control unit 408 prevents the reagent containers 301A and 301B from being set without driving the stoppers 202.

By such an operation of the stoppers 202, it is desirable to control whether the reagent containers 301A and 301B can be inserted into the slot tips 403 and whether the reagent containers 301A and 301B can be pulled out from the slot tips 403.

The stopper detection sensor 411 is installed at the lowering position of the stopper 202, and can determine whether the stopper 202 is at the lifting position 409 or the lowering position 410.

The reagent container detection sensor 412 is installed in the slot tip 403, and determines whether the reagent containers 301A and 301B reach (are installed in) the slot tips 403 using the reagent container detection sensor 412.

The RFID readers 203 are device that read the reagent information recorded in the RFID tags 309 attached to the labels 308 of the reagent containers 301A and 301B, and are installed at positions, in side surfaces of the slots 201, where the RFID tags 309 can be read when the insertion direction front surfaces 302 of the reagent containers 301A and 301B abut on the stoppers 202 and stop.

The piercing needles 205 are device that join the supply flow path 206 connecting the position where the reagent is used and the reagent containers 301A and 301B installed in the system reagent installation portion 200 to the reagent containers 301A and 301B, and are installed at tips 204 of the slots 201.

The piercing needle 205 is connected to the supply flow path 206 and a liquid driving device such as a syringe (not shown), and can supply the reagent from the reagent containers 301A and 301B to a use place on the analyzer.

Next, an installation position condition of the stopper 202 that is suitably required to implement control of whether the reagent containers 301A and 301B can be inserted into the piercing needles 205 by the stoppers 202 and whether the reagent containers 301A and 301B can be pulled out from the piercing needles 205, will be described with reference to FIGS. 5 to 11.

First, a condition in a case of using the reagent container 301A illustrated in FIG. 2 will be described with reference to FIGS. 5 to 8. FIG. 5 is a view schematically illustrating a positional relationship between the reagent containers 301A and 301B, the stopper 202, and the piercing needle 205 in the slot 201. FIGS. 6 to 8 are views illustrating an installation position of the stopper when the reagent container that contains the system reagent and is illustrated in FIG. 2 is used.

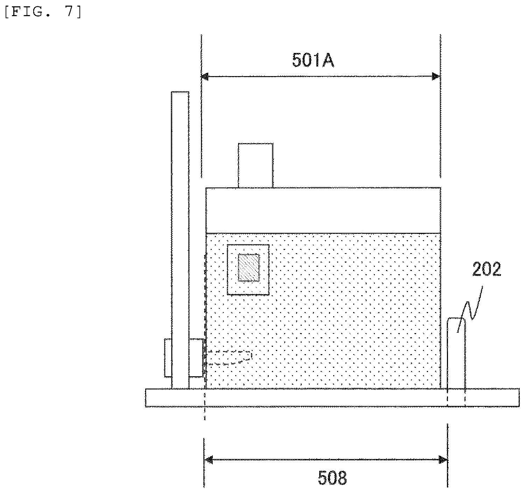

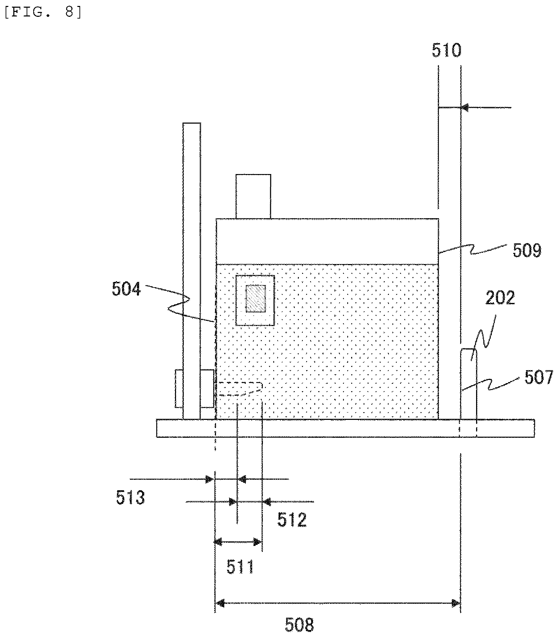

As illustrated in FIGS. 7 and 8, when the reagent container 301A is inserted into the slot tip 403, the insertion direction front surface 302 is inserted up to an abutting surface 504. When the reagent container 301A is inserted up to the abutting surface 504, the piercing needle 205 is sufficiently inserted into the reagent container 301A.

Here, a length of the reagent container 301A in a direction along the slot 201 is referred to as a length 501, and a distance 508 from the piercing needle 205 (the abutting surface 504) to a surface of the stopper 202 on the reagent container rear end 509 side is referred to as L2.

In FIGS. 6 to 8, in order to prevent the reagent container 301A from being pulled out by the stopper 202, it is desirable that the length 501 and the distance 508 satisfy conditions (1) and (2) to be listed below.
(1) As illustrated in FIG. 7, when a maximum length 501A from the insertion direction front surface 302 of the reagent container 301A to the reagent container rear end 509 with a manufacturing tolerance of the reagent container 301A taken into consideration is referred to as L1, a relationship L1 < L2 is satisfied.
(2) As illustrated in FIG. 8, a distance 510 from the reagent container rear end 509 to a surface of the stopper 202 on the reagent container rear end 509 side when the reagent container 301A is in contact with the piercing needle 205 is referred to as L3. Further, a length from the abutting surface 504 of the reagent container 301A to a tip of the piercing needle 205 is referred to as a length 511, and a length obtained by subtracting a length 512 of a cut needle portion of the piercing needle 205 from the length 511 is referred to as a length 513. The length 513 is a minimum length necessary for the reagent container 301A to maintain the joint with the piercing needle 205, and the length 513 referred to as L4. At this time, a relationship L3 < L4 is satisfied.

Among the conditions, the condition (2) is a condition that is desired to be satisfied in order to prevent the system reagent from not being supplied to the analyzer due to loss of the connection between the reagent container 301A and the piercing needle 205 even when the user tries to erroneously pull out the reagent container 301A in use while the reagent container 301A is being used.

Here, the length 511 of the piercing needle 205 can be freely designed within a range satisfying the condition (2) described above. Here, by not making the piercing needle 205 longer than necessary, it is possible to reduce as much as possible a possibility that the piercing needle 205 is bent when the piercing needle 205 is inserted into or pulled out from the septum portion 307. Therefore, it is desirable that the length 511 of the piercing needle 205 is set to a minimum length within a range satisfying the above-described conditions.

Next, the installation position condition of the stopper 202 when the reagent container 301B illustrated in FIG. 3 is used will be described with reference to FIGS. 9 to 11.A basic structure of the slot 201 is common to that when the reagent container 301A is used, and description thereof will be omitted. FIGS. 9 to 11 are views illustrating the installation position of the stopper when the reagent container illustrated in FIG. 3 is used.

As illustrated in FIG. 9, a distance between a front surface 603 of the cutout portion 310 and a stopper rear end 604 is referred to as a distance 605.

Similar to the reagent container 301A described with reference to FIGS. 6 to 8, the reagent container 301B has an abutting surface 504 at a position where the reagent container 301B is connected to the analyzer. When the insertion direction front surface 302 is pushed into the slot tip 403, the insertion direction front surface 302 abuts against the abutting surface 504 and stops.

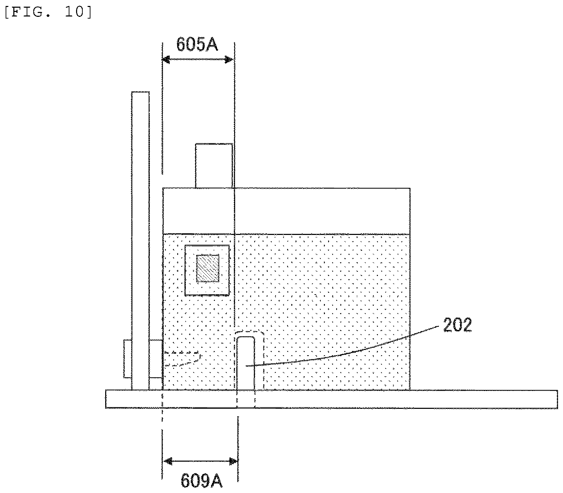

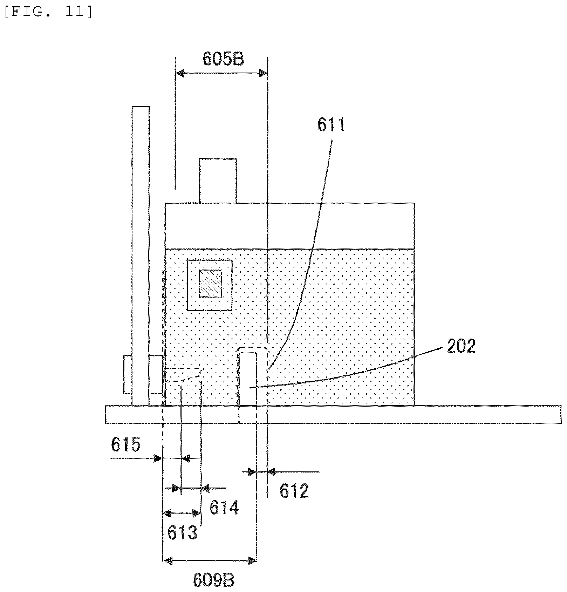

A distance from the abutting surface 504 to a stopper front surface 507 is referred to as a distance 609A. In order to prevent the reagent container 301B from being pulled out by a stopper 610 when the reagent container 301B is used, it is desirable to satisfy relationships (3) to (6) to be listed below.
(3) As illustrated in FIG. 10, when a maximum length 605A from the insertion direction front surface 302 of the reagent container 301B to the cutout portion rear end 611 with a manufacturing tolerance of the reagent container 301B taken into consideration is referred to as L5, and the distance 609A from the piercing needle 205 to a surface of the stopper 202 on the cutout portion rear end 611 side is referred to as L6, a relationship L5 < L6 is satisfied.
(4) As illustrated in FIG. 11, when a minimum length 605B from the piercing needle 205 of the reagent container 301B to a surface of the cutout portion 310 on the cutout portion rear end 611 side with a manufacturing tolerance of the reagent container 301B taken into consideration is referred to as L7, and a distance 609B from the piercing needle 205 to a surface of stopper 202 on a side opposite to cutout portion rear end 611 side is referred to as L8, a relationship L7 > L8 is satisfied.
(5) As illustrated in FIG. 11, when a width of the cutout portion 310 of the reagent container 301B is referred to as L9 and a width of the stopper 202 is referred to as L10, a relationship L9 > L10 is satisfied.
(6) As illustrated in FIG. 11, a length 612 from the surface of the cutout portion 310 on the cutout portion rear end 611 side to a surface of the stopper 202 facing the cutout portion rear end 611 side is referred to as L11. Further, a distance from the abutting surface 504 to the tip of the piercing needle 205 is referred to as a length 613, and a length obtained by subtracting a length 614 of the cut needle portion of the piercing needle 205 from the length 613 is referred to as a length 615. The length 615 is a minimum length necessary for the reagent container 301B to maintain the joint with the piercing needle 205, and when the length 615 is referred to as L12, a relationship of L12 > L11 is satisfied.

It is desirable that the length of the piercing needle 205 in FIG. 9 is set to a minimum length within a range satisfying the above-described conditions as in the case of FIGS. 6 to 8.

Here, when the reagent container 301B illustrated in FIG. 3 is used, there is an advantage that an entire length of the slot 201 can be shortened. On the other hand, it is necessary to provide the cutout portion 310 in the reagent container 301B, and there is a disadvantage that a shape of the reagent container is complicated and manufacturing cost is increased.

Therefore, which of the reagent container 301A described with reference to FIG. 2 and the reagent container 301B described with reference to FIG. 3 is to be used can be appropriately selected depending on which element is prioritized.

In the reagent container 301B illustrated in FIG. 3, the cutout portion 310 is not limited to being provided on the bottom surface of the reagent container 301B, and can be provided on the side surface 303 facing the insertion direction front surface 302. In this case, among the conditions (3) to (6), the conditions (4) and (5) are unnecessary. In this case, an effect of reducing the length of the slot 201 is reduced, whereas the shape is simplified.

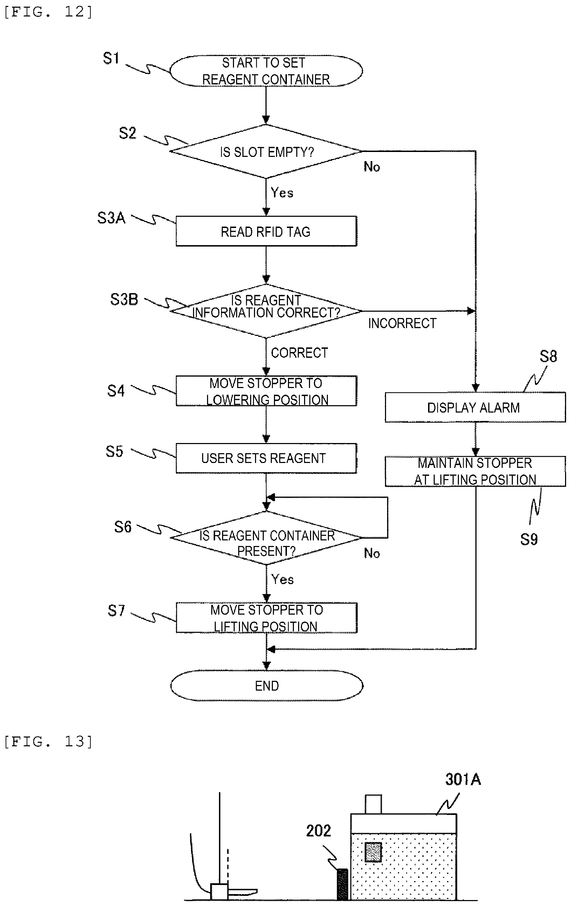

Next, a process of installing and removing the system reagent in and from the system reagent installation portion 200 in the automatic analyzer to which the invention is applied will be described with reference to FIGS. 12 to 19.

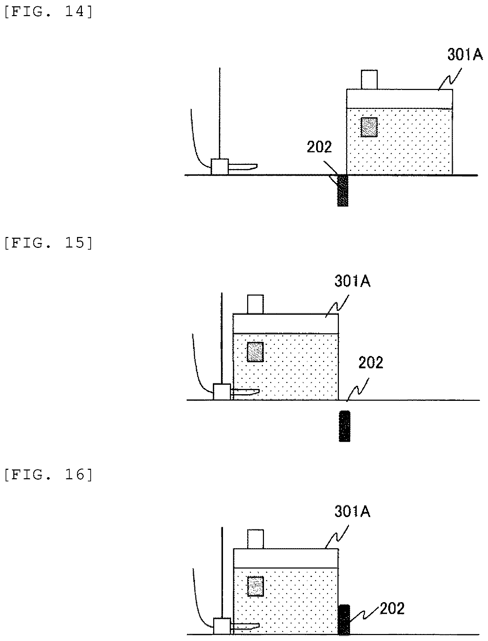

First, the process of installing the system reagent will be described with reference to FIGS. 12 to 16. FIG. 12 is a flowchart when the reagent container is to be installed. FIG. 13 is a view illustrating a positional relationship between the reagent container 301B and the stopper 202 in steps S1, S2, S3A, and S3B in FIG. 12. FIG. 14 is a view illustrating a positional relationship between the reagent container 301B and the stopper 202 in step S4 in FIG. 12. FIG. 15 is a view illustrating a positional relationship between the reagent container 301B and the stopper 202 in steps S5 and S6 in FIG. 12. FIG. 16 is a view illustrating a positional relationship between the reagent container 301B and the stopper 202 in step S7 in FIG. 12.

Since the reagent installing process is common to the reagent container 301A illustrated in FIG. 2 and the reagent container 301B illustrated in FIG. 3, a case of using the reagent container 301A described in FIG. 2 will be described here.

As a first operation of starting the installation of the reagent container 301A, as illustrated in FIG. 13, the reagent container 301A to be installed by the user is placed in the slot 201. At this time, the stopper control unit 408 fixes the stopper 202 at the lifting position. Accordingly, even if the tip of the reagent container 301A abuts the stopper 202 and an attempt is made to insert the reagent container 301A into the slot 201, the stopper 202 interferes with the reagent container 301A, and the reagent container 301A is prevented from being further inserted into the slot 201 (FIG. 12, step S1).

Next, the stopper control unit 408 determines whether the slot 201 in which the user intends to install the reagent container 301A is empty based on the information from the reagent container detection sensor 412 (step S2). When it is determined that the slot 201 is empty, processing proceeds to step S3A. On the other hand, a case where it is determined that the reagent container 301A is not empty is a case where the reagent container 301A being used is present, and the user cannot install the reagent container 301A. At this time, the processing proceeds to step S8.

Thereafter, the RFID reader 203 tries to read the RFID tag 309 at a regular interval (step S3A). When the reagent container 301A is placed in the slot 201 by the user and stops by interfering with the stopper 202, the information on the RFID tag 309 can be read by the RFID reader 203.

After recognizing that the information on the RFID tag 309 of the reagent container 301A is read by the RFID reader 203, the stopper control unit 408 determines whether the reagent container 301A to be installed by the user is to be installed (step S3B).

A case where it is determined that the reagent container 301A is not to be installed is any one of a case where the reagent type is different, a case where the expiration date has expired, and a case where the reagent container 301A is used in another device. Further, when the information read from the RFID tag 309 deviates from information to be originally read, it is determined that the reagent container 301A is not to be installed. These determinations are performed by the control unit 131 based on the information read from the RFID tag 309.

When the stopper control unit 408 determines that the reagent container 301A to be installed by the user is not to be installed, the processing proceeds to step S8.

When it is determined that the reagent container 301A to be installed by the user is not to be installed, it is desirable to notify the user. Therefore, when it is determined in step S2 that the slot 201 is not empty or when it is determined that the reagent information is not correct, the stopper control unit 408 issues an alarm (step S8) and notifies the user. Examples of a notification method include a method of lighting an indicator lamp, a method of displaying the alarm on a user interface, and the like.

For example, the indicator lamp is constituted by a button having an LED built therein, which is often disposed in an upper portion of the slot 201 in the system reagent installation portion 200. Depending on a manner of lighting the indicator lamp, the indicator lamp is often used to notify the user of the slot in which the reagent container needed to be replaced is placed, or to notify the user that an inappropriate reagent is installed. Further, the indicator lamp also serves as the button as described above, and when the user presses the button when the installation of the reagent container 301A in the slot 201 is completed completely, the analyzer side can recognize that the installation of the reagent container 301A is completed.

Thereafter, the stopper control unit 408 fixes the stopper 202 at the lifting position (step S9), and ends the processing. Therefore, the reagent container 301A interferes with the stopper 202, and the reagent container 301A is prevented from being pushed into the connection position. Accordingly, it is possible to prevent the user from installing the reagent container 301A not to be installed originally.

It is desirable to confirm whether the reagent container 301A to be installed by the user can be installed before the reagent container 301A is installed at the connection position.

When the reagent container 301A is installed at the connection position, the piercing needle 205 has already penetrated the septum portion 307 of the reagent container 301A and is in contact with the reagent in the container. Therefore, even if the user notices that the reagent container 301A is mistaken by the notification from the analyzer, mixing of the reagents occurs through the piercing needle 205 and the supply flow path 206 ahead of the piercing needle 205. Since the mixing with the reagent not to be installed may affect an analysis performance, a complicated additional operation before replacement with a correct reagent such as cleaning of the piercing needle 205 and the supply flow path 206 are required. In order to prevent the additional operation, it is very useful to determine whether the reagent container 301A can be installed at a stage before the reagent container 301A is installed at the connection position, and to prevent the reagent container 301A from being installed when it is determined that the reagent container 301A cannot be installed.

When the reagent information is not read within a predetermined time in step S3A, there is a possibility that some inconvenience occurs, such as the reagent container 301A is not installed in an appropriate orientation, the replacement of the reagent container is forgotten, and a completely different reagent container is installed. Therefore, it is desirable for the stopper control unit 408 to issue the alarm also in this case.

When it is determined in step S3B that the reagent container 301A to be installed by the user may be installed, the stopper control unit 408 moves the stopper 202 to the lowering position and fixes the stopper 202 as illustrated in FIG. 14 (step S4).

When the stopper 202 is fixed at the lowering position, as illustrated in FIG. 15, the user can manually press the reagent container 301A and insert the reagent container 301A into the slot 201 (step S5). The user can easily recognize that the reagent container 301A may be installed based on a lowering movement of the stopper 202.

Thereafter, the stopper control unit 408 determines whether the reagent container 301A is at the connection position with the piercing needle 205 based on the information from the reagent container detection sensor 412 (step S6). As illustrated in FIG. 15, when the reagent container 301A is pushed to the connection position, the piercing needle 205 penetrates the septum portion 307 of the reagent container 301A to connect the analyzer and the reagent, and the analyzer can be used.

When it is determined that the reagent container 301A is present, the processing proceeds to step S7, and when it is determined that the reagent container 301A is not present, the processing returns to step S6 to wait for the reagent container 301A to be installed.

When the reagent container 301A is not connected to the connection position within a predetermined time in step S6, there is a possibility that the inconvenience such as forgetting to install the reagent container 301A occurs, and therefore, it is desirable that the stopper control unit 408 issues the alarm.

When the reagent container 301A is detected, the stopper control unit 408 moves the stopper 202 to the lifting position and fixes the stopper 202 as illustrated in FIG. 16 (step S7) . By fixing the stopper 202 to the lifting position, when the user tries to remove the reagent container 301A, the reagent container 301A interferes with the stopper 202 and is prevented from being pulled out. Accordingly, it is possible to prevent the user from erroneously removing the reagent container 301A while the reagent container 301A is being used.

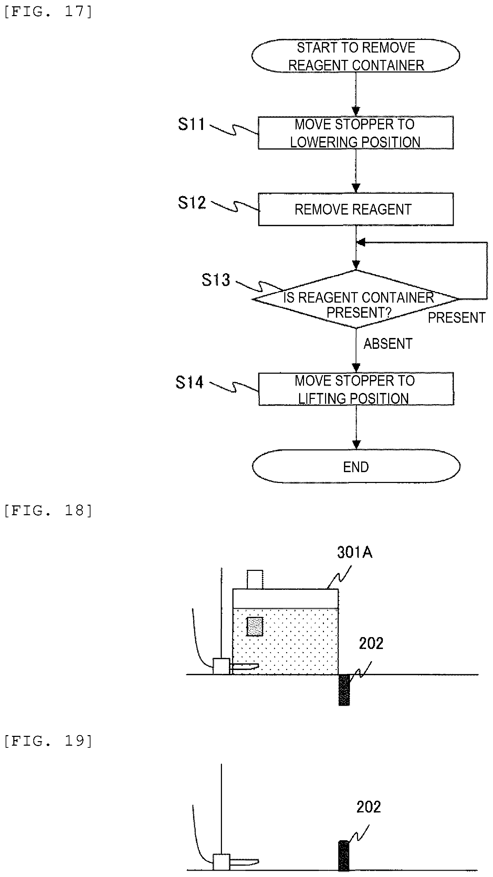

Next, the process of removing the system reagent from the system reagent installation portion 200 will be described with reference to FIGS. 17 to 19. Similar to installation of the reagent container 301A, since the removing process is common to the reagent container 301A illustrated in FIG. 2 and the reagent container 301B illustrated in FIG. 3, a case of using the reagent container 301A described in FIG. 2 will be described here.

FIG. 17 is a flowchart when removing the reagent container 301A, FIG. 18 is a view illustrating a positional relationship between the reagent container 301A and the stopper 202 in step S11 in FIG. 17, and FIG. 19 is a view illustrating a positional relationship between the reagent container 301A and the stopper 202 when all steps in FIG. 17 are completed.

Examples of a case where the reagent container 301A needs to be replaced include a case where the reagent container 301A is empty, a case where the expiration date of the reagent has expired, a case where the user explicitly instructs the analyzer to replace the reagent, and a case where the analyzer determines that the installed reagent is unusable based on an accuracy management result and the like. The determination is performed by the control unit 131.

When it is determined that the replacement is necessary, the stopper control unit 408 notifies the user of the reagent replacement by blinking the indicator lamp, and moves the stopper 202 to the lowering position and fixes the stopper 202 as illustrated in FIG. 18 (step S11).

In this state, the user can pull out the reagent container 301A (step S12). The user can easily recognize whether the reagent container 301A can be removed by checking, for example, whether the stopper 202 is lowered.

Thereafter, the stopper control unit 408 determines whether the reagent container 301A is removed from the connection position by the reagent container detection sensor 412 based on the information from the reagent container detection sensor 412 (step S13).

When it is determined that the reagent container 301A is removed, the processing proceeds to step S14, and when it is determined that the reagent container 301A is not removed, the processing returns to step S13 to wait for the removal of the reagent container 301A.

When the reagent container 301A remains connected to the connection position within the predetermined time in step S13, there is a possibility that the inconvenience such as forgetting to replace the reagent container 301A occurs, and therefore, it is desirable that the stopper control unit 408 issues the alarm.

After detecting that the reagent container 301A is removed from the connection position, the stopper control unit 408 moves the stopper 202 to the lifting position and fixes the stopper 202 (step S14). The state is illustrated in FIG. 19.

In this state, installation of a next reagent container 301A as described above is prepared.

Next, an effect of the present embodiment will be described.

The automatic immunoassay analyzer 1 according to the present embodiment described above includes: the system reagent installation portion 200 configured to install the reagent containers 301A and 301B that contain the reagent used in the analysis; the piercing needles 205 configured to join the supply flow path 206 connecting the position where the reagent is used with the reagent containers 301A and 301B installed in the system reagent installation portion 200 to the reagent containers 301A and 301B; the slots 201 configured to introduce the reagent containers 301A and 301B to the piercing needles 205; and the stoppers 202 configured to prevent the installed reagent containers 301A and 301B from moving in the slots 201. Here, the stoppers 202 are provided at the positions where the stoppers 202 are in contact with the insertion direction front surfaces 302 of the reagent containers 301A and 301B and prevent the reagent containers 301A and 301B from being installed before the reagent containers 301A and 301B are joined to the piercing needles 205 and where the stoppers 202 interfere with the holding surfaces of the reagent containers 301A and 301B and prevent the reagent containers 301A and 301B from moving in the slots 201 even if the reagent containers 301A and 301B are attempted to be removed in a state where the reagent containers 301A and 301B are joined to the piercing needles 205.

Accordingly, two objects of preventing the installation of the erroneous reagent containers 301A and 301B and preventing the erroneous removal of the reagent containers 301A and 301B during the reagent is being used can be implemented by the operation of the stoppers 202.

Further, since a mechanism for achieving the above two objects is only the stopper 202 and a device related thereto, it is possible to reduce a size of the system reagent installation portion 200. Accordingly, for example, as described in the embodiment, the system reagent installation portion 200 can be installed on the back side of the front cover having a larger space than other positions. In recent years, the number of mechanisms to be mounted tends to increase due to expansion of functions required for the automatic analyzer. On the other hand, an increase in the analyzer size imposes a limited analyzer installation space, which is disadvantageous for the user. However, according to the invention, it is possible to prevent the increase in the analyzer size while ensuring user convenience of preventing erroneous handling of the system reagent.

When the holding surface is the reagent container rear end 509 facing the insertion direction front surface 302, when the maximum length 501A from the insertion direction front surface 302 of the reagent container 301A to the reagent container rear end 509 with a manufacturing tolerance of the reagent container 301A taken into consideration is referred to as L1 and when the distance 508 from the piercing needle 205 to the surface of the stopper 202 on the reagent container rear end 509 side is referred to as L2, the relationship L1 < L2 is satisfied. Therefore, an effect of preventing the reagent container 301A from being removed by the stopper 202 can be reliably exhibited.

Further, when the distance 510 from the reagent container rear end 509 to the surface of the stopper 202 on the reagent container rear end 509 side when the reagent container 301A is in contact with the piercing needle 205 is referred to as L3 and when the minimum length 513 necessary for the reagent container 301A to maintain the joint with the piercing needle 205 is referred to as L4, the relationship L3 < L4 is satisfied. Therefore, it is possible to reliably prevent the piercing needle 205 from being unexpectedly pulled out from the reagent container 301A during the reagent is being used, and it is possible to implement a stable analysis operation.

When the reagent container 301B has the cutout portion 310 on at least one of the bottom surface thereof and the surface facing the insertion direction front surface 302, the holding surface is the cutout portion rear end 611 of the cutout portion 310, the maximum length 605A from the insertion direction front surface 302 of the reagent container 301B to the cutout portion rear end 611 with a manufacturing tolerance of the reagent container 301B taken into consideration is referred to as L5, and the distance 609A from the piercing needle 205 to the surface of the stopper 202 on the cutout portion rear end 611 side is referred to as L6, the relationship L5 < L6 is satisfied, when the reagent container 301B has the cutout portion 310 on the bottom surface, the maximum length 605B from the piercing needle 205 of the reagent container 301B to the surface of the cutout portion 310 on the cutout portion rear end 611 side with a manufacturing tolerance of the reagent container 301B taken into consideration is referred to as L7, and the distance 609B from the piercing needle 205 to the surface of stopper 202 on the side opposite to cutout portion rear end 611 side is referred to as L8, the relationship L7 > L8 is satisfied, and when the width of the cutout portion 310 is referred to as L9 and the width of the stoppers 202 is referred to as L10, the relationship L9 > L10 is satisfied. Therefore, an effect of preventing the reagent container 301B from being removed by the stopper 202 can be reliably exhibited.

Further, when the distance 612 from the surface of the cutout portion 310 on the cutout portion rear end 611 side to the surface of the stopper 202 on the side opposite to the cutout portion rear end 611 side is referred to as L11 and the minimum length 615 necessary for the reagent container 301B to maintain the joint with the piercing needle 205 is referred to as L12, the relationship of L12 > L11 is satisfied. Therefore, it is possible to reliably prevent the piercing needle 205 from being unexpectedly pulled out from the reagent container 301B during the reagent is being used, and it is possible to implement the stable analysis operation.

Further, the system reagent installation portion 200 further includes the stopper control unit 408 that drives and controls the stopper 202. The stopper control unit 408 fixes the stoppers 202 except for the timing at which the reagent containers 301A and 301B are replaced, and prevents the movement of the reagent containers 301A and 301B. Therefore, it is possible to reliably prevent erroneous reagent containers 301A and 301B from being installed, and it is possible to perform more stable sample analysis.

Further, the system reagent installation portion 200 further includes the RFID readers 203 that read the reagent information recorded in the RFID tags 309 attached to the reagent containers 301A and 301B when the reagent containers 301A and 301B are stopped by the stoppers 202. The stopper control unit 408 drives the stoppers 202 so as not to prevent the reagent containers 301A and 301B from being set when the stopper control unit 408 determines that the reagent containers 301A and 301B installed in the slots 201 are correct based on the reagent information, and prevents the reagent containers 301A and 301B from being set without driving the stoppers when the stopper control unit 408 determines that the reagent containers 301A and 301B are not correct. Therefore, when the reagent containers 301A and 301B are installed in the slots 201, it is possible to automatically determine whether the installed reagent is appropriate and to notify the user of the determination, and it is possible to further reduce burden on the user.

Further, the stopper 202 is pushed out from the lower side to the upper side of the slot 201 so as to prevent the reagent containers 301A and 301B from being set or being removed. Therefore, the stopper 202, the motor 406 for driving the stopper 202, and the like can be disposed on the lower side of the system reagent installation portion 200 having a sufficient space, and an increase in the size of the analyzer can be more reliably prevented.

### <Others>

The invention is not limited to the above embodiment, and various modifications and applications can be made thereto . The present embodiment described above has been described in detail for easy understanding of the invention, and is not necessarily limited to those including all the configurations described above.

For example, the embodiment has been described in which the stopper 202 is moved up and down by the motor 406, and the stopper 202 can be configured to mechanically protrude from a transport surface of the slot 201 when the reagent containers 301A and 301B abut against an abutment surface.

### Reference Sign List

1 automatic immunoassay analyzer
100 transport line
100A rack
100B sample container
101 reagent container
102 reagent disk
103 sample dispensing mechanism
104 reagent dispensing mechanism
105 magnetic particle stirring mechanism
106 reaction vessel
107 dispensing tip
108 magazine
109 incubator
110 reaction vessel disposal portion
111 dispensing tip installation position
112 dispensing tip disposal position
113 transport mechanism
114 magnetic separator
115 BF separation transport mechanism
116 reaction solution suction mechanism
117 cleaning liquid A discharging mechanism
118 cleaning liquid B discharging mechanism
119 detection solution discharging mechanism
120 detection unit
121 detection unit transport mechanism
131 control unit
132 recording device
133 display device
134 input device
200 system reagent installation portion (reagent container installation portion)
201 slot (slot portion)
202 stopper
203 RFID reader
204 tip
205 piercing needle (joint portion)
206 supply flow path
301, 301A, 301B reagent container
302 insertion direction front surface
303 side surface (holding surface)
304 top surface
305A, 305B bottom surface
306 screw cap
307 septum portion
308 label
309 RFID tag
310 cutout portion
403 slot tip
406 motor
407 belt
408 stopper control unit
409 lifting position
410 lowering position
411 stopper detection sensor
412 reagent container detection sensor
501 length of reagent container
501A maximum length with manufacturing tolerance of reagent container taken into consideration (L1)
504 reagent container abutting surface
507 stopper front surface
508 distance from reagent container abutting surface to stopper front surface (L2)
509 reagent container rear end (holding surface)
510 distance between reagent container rear end and stopper front surface (L3)
511 length of piercing needle
512 length of needle-shaped portion of piercing needle
513 length with length of needle-shaped portion subtracted from total length of piercing needle (L4)
603 front surface of cutout portion
604 stopper rear end
605 distance from front surface of cutout portion to stopper rear end
605A maximum distance from front surface of cutout portion to stopper rear end with manufacturing tolerance of reagent container taken into consideration (L5)
605B minimum distance from front surface of cutout portion to stopper rear end with manufacturing tolerance of reagent container taken into consideration (L7)
609A distance from reagent container abutting surface to stopper front surface (L6)
609B distance from reagent container abutting surface to stopper rear surface (L8)
610 stopper
611 cutout portion rear end (holding surface)
612 length of gap between cutout portion rear end and stopper rear surface (L11)
613 length from reagent container abutting surface to piercing needle tip
614 length of needle-shaped portion of piercing needle
615 length other than needle-shaped portion of piercing needle (L12)

## Claims

1. An automatic analyzer comprising:
a reagent container installation portion configured to install a reagent container that contains a reagent used in an analysis;
a joint portion configured to join a supply flow path connecting a position where the reagent is used with the reagent container installed in the reagent container installation portion to the reagent container; and
a slot portion configured to introduce the reagent container to the joint portion, wherein
the automatic analyzer comprises a stopper configured to prevent the installed reagent container from moving in the slot portion, and wherein
the stopper is provided at a position where the stopper is in contact with an insertion direction front surface of the reagent container and prevents the reagent container from being installed before the reagent container is joined to the joint portion and where the stopper interferes with a holding surface of the reagent container and prevents the reagent container from moving in the slot portion even if the reagent container is attempted to be removed in a state where the reagent container is joined to the joint portion.

2. The automatic analyzer according to claim 1, wherein
when the holding surface is a surface facing the insertion direction front surface,
a relationship L1 < L2 is satisfied where a maximum length of the reagent container from the insertion direction front surface to the holding surface with a manufacturing tolerance of the reagent container taken into consideration is referred to as L1 and a distance from the joint portion to a surface of the stopper at a side of the holding surface is referred to as L2.

3. The automatic analyzer according to claim 2, wherein
a relationship L3 < L4 is satisfied where a distance from the holding surface to the surface of the stopper at the side of the holding surface when the reagent container is in contact with the joint portion is referred to as L3 and a minimum length required to keep the reagent container being joined to the joint portion is referred to as L4.

4. The automatic analyzer according to claim 1, wherein
when the reagent container includes a cutout portion on at least one of a bottom surface of the reagent container or a surface facing to the insertion direction front surface, and the holding surface is on the cutout portion,
a relationship L5 < L6 is satisfied where a maximum length of the reagent container from the insertion direction front surface to the holding surface with a manufacturing tolerance of the reagent container taken into consideration is referred to as L5 and a distance from the joint portion to a surface of the stopper at a side of the holding surface is referred to as L6.

5. The automatic analyzer according to claim 4, wherein
when the reagent container includes the cutout portion on the bottom surface,
a relationship L7 > L8 is satisfied where a minimum length of the reagent container from the joint portion to a surface of the cutout portion at a side of the holding surface with a manufacturing tolerance of the reagent container taken into consideration is referred to as L7 and a distance from the joint portion to a surface of the stopper at a side that is opposite to the side of the holding surface is referred to as L8.

6. The automatic analyzer according to claim 5, wherein
a relationship L9 > L10 is satisfied where a width of the cutout portion is referred to as L9 and a width of the stopper is referred to as L10

7. The automatic analyzer according to claim 6, wherein
a relationship L12 > L11 is satisfied where a distance from a surface of the cutout portion at the side that is opposite to the side of the holding surface to the surface of the stopper at the side of the holding surface is referred to as L11 and a minimum length required to keep the reagent container being joined to the joint portion is referred to as L12.

8. The automatic analyzer according to claim 1, further comprising:
a stopper control unit configured to drive and control the stopper, wherein
the stopper control unit fixes the stopper and prevents the reagent container from moving except for a timing at which the reagent container is to be replaced.

9. The automatic analyzer according to claim 8, further comprising:
an RFID reader configured to read reagent information that is recorded in an RFID tag attached to the reagent container when the reagent container is stopped by the stopper, wherein
the stopper control unit drives the stopper so as not to prevent the reagent container from being set when the stopper control unit determines that the reagent container installed in the slot portion is correct based on the reagent information, and does not drive the stopper so as to prevent the reagent container from being set when the stopper control unit does not determine that the reagent container is correct.

10. The automatic analyzer according to claim 1, wherein
the stopper is configured to be pushed out from a lower side to an upper side of the slot portion so as to prevent the reagent container from being set or being removed.
